# EUROPEAN PATENT APPLICATION

(11) **EP 4 622 202 A1**
(43) Date of publication of application: **24.09.2025**
(21) Application number: 22969758.6
(22) Date of filing: 30.12.2022
(51) Int. Cl.: H04L 27/00

(54) **WIRELESS COMMUNICATION METHOD AND DEVICE**

(71) Applicant: Huawei Technologies Co., Ltd., Shenzhen, Guangdong 518129 (CN)
(72) Inventor: XU, Liang, Shenzhen, Guangdong 518129 (CN); LI, Zejiao, Shenzhen, Guangdong 518129 (CN)
(74) Representative: Goddar, Heinz J.
(86) International application number: PCT/CN2022/143878
(87) International publication number: WO 2024/138613

(57) **Abstract**

This application provides a wireless communication method and apparatus, which may be applied to a cellular wireless network scenario and a time division duplex (time division duplex, TDD) scenario, and in particular, applied to a sounding reference signal (sounding reference signal, SRS) channel quality measurement scenario. In the method, a latter SRS channel processing solution is determined based on a former SRS channel processing result, so that dynamic and flexible channel splitting and deployment can be supported, and a channel processing capability of a communication apparatus can be fully utilized, thereby helping improve wireless communication performance.

## Description

### TECHNICAL FIELD

This application relates to the communication field, and more specifically, to a wireless communication method and apparatus.

### BACKGROUND

With development of communication technologies, to improve a coverage capability of a network, a data unit (data unit, DU) and a radio unit (radio unit, RU) may be disposed at different geographical locations to jointly provide a service for a user. When an enhanced common public radio interface (enhanced common public radio interface, eCPRI) is an interface connecting the DU and the RU, the eCPRI splits baseband processing of a gNodeB into two parts, where a DU side is referred to as a baseband processing unit (baseband high, BBH) of a baseband unit (baseband unit, BBU), and an RU side is referred to as a baseband processing unit (baseband low, BBL) of an active antenna unit (active antenna unit, AAU).

In a current technology, during system startup, splitting and deployment solutions of uplink and downlink channels on the BBH and the BBL are semi-statically determined between the BBH and the BBL by using a negotiation mechanism. However, splitting and function deployment of the channels on the BBL and the BBH are basically independent of each other. In addition, actual usage of some channels on the BBL in a live network is far lower than a designed processing capability, and processing specifications of other channels are usually limited. This restricts improvement of performance of a wireless communication system.

Therefore, a communication method is urgently needed to support dynamic and flexible channel splitting and deployment, fully utilize a processing capability on a BBL side, and improve wireless communication performance.

### SUMMARY

This application provides a wireless communication method and apparatus, to help improve wireless communication performance.

According to a first aspect, a wireless communication method is provided, including: A first communication apparatus determines a second SRS channel processing solution based on a first sounding reference signal SRS channel processing result, where the second SRS channel processing solution is used by a second communication apparatus to process an SRS. The first communication apparatus sends the second SRS channel processing solution to the second communication apparatus.

According to the technical solution of this application, a latter SRS channel processing solution is determined based on a former SRS channel processing result, so that dynamic and flexible channel splitting and deployment can be supported, and a processing capability on a BBL side can be fully utilized, thereby improving wireless communication performance.

With reference to the first aspect, in some implementations of the first aspect, the method further includes: The first communication apparatus receives a first channel processing result, where the first channel processing result includes the first SRS channel processing result.

With reference to the first aspect, in some implementations of the first aspect, the first channel processing result further includes at least one of the following: a physical downlink shared channel PDSCH processing result, a physical downlink control channel PDCCH processing result, a physical uplink shared channel PUSCH processing result, and a physical uplink control channel PUCCH processing result.

With reference to the first aspect, in some implementations of the first aspect, the method further includes: The first communication apparatus receives a first channel processing capability of the second communication apparatus, where the first channel processing capability includes an SRS channel processing capability. That a first communication apparatus determines a second SRS channel processing solution based on a first SRS channel processing result includes: The first communication apparatus determines a margin of the first channel processing capability of the second communication apparatus based on the first channel processing capability of the second communication apparatus and the first channel processing result. The first communication apparatus determines the second SRS channel processing solution based on the margin of the first channel processing capability of the second communication apparatus.

With reference to the first aspect, in some implementations of the first aspect, the method further includes: The first communication apparatus receives a channel capability conversion rule, where the channel capability conversion rule includes a conversion rule between an SRS channel capability and a non-SRS channel capability on a first channel. That the first communication apparatus determines the second SRS channel processing solution based on the margin of the first channel processing capability of the second communication apparatus includes: The first communication apparatus determines the second SRS channel processing solution based on the margin of the first channel processing capability of the second communication apparatus and the channel capability conversion rule.

With reference to the first aspect, in some implementations of the first aspect, the second SRS processing solution includes at least one of the following: a split option, a slot number of an SRS channel, a symbol of an SRS channel, a frequency domain location of an SRS channel, and combing information of an SRS channel.

With reference to the first aspect, in some implementations of the first aspect, the method further includes: The first communication apparatus receives a second SRS channel processing result, where the second SRS channel processing result is obtained by the second communication apparatus based on the second SRS channel processing solution.

According to a second aspect, a wireless communication method is provided. The method includes: A second communication apparatus receives a second sounding reference signal SRS channel processing solution, where the second SRS channel processing solution is determined by a first communication apparatus based on a first SRS channel processing result. The second communication apparatus processes an SRS based on the second SRS channel processing solution, to obtain a second SRS channel processing result.

According to the technical solution of this application, a latter SRS channel processing solution is determined based on a former SRS channel processing result, so that dynamic and flexible channel splitting and deployment can be supported, and a processing capability on a BBL side can be fully utilized, thereby improving wireless communication performance.

With reference to the second aspect, in some implementations of the second aspect, the method further includes: The second communication apparatus sends a first channel processing result, where the first channel processing result includes the first SRS channel processing result.

With reference to the second aspect, in some implementations of the second aspect, the method further includes: The second communication apparatus processes the SRS based on a first SRS channel processing solution, to obtain the first SRS channel processing result, where the first SRS channel processing solution is a locally stored SRS channel processing solution.

With reference to the second aspect, in some implementations of the second aspect, the first channel processing result further includes at least one of the following: a physical downlink shared channel PDSCH processing result, a physical downlink control channel PDCCH processing result, a physical uplink shared channel PUSCH processing result, and a physical uplink control channel PUCCH processing result.

With reference to the second aspect, in some implementations of the second aspect, the method further includes: The second communication apparatus sends a first channel processing capability of the second communication apparatus.

With reference to the second aspect, in some implementations of the second aspect, the method further includes: The second communication apparatus sends a channel capability conversion rule, where the channel capability conversion rule includes a conversion rule between an SRS channel capability and a non-SRS channel capability on a first channel.

With reference to the second aspect, in some implementations of the second aspect, the second SRS processing solution includes at least one of the following: a split option, a slot number of an SRS channel, a symbol of an SRS channel, a frequency domain location of an SRS channel, and combing information of an SRS channel.

According to a third aspect, a communication apparatus is provided. The apparatus is configured to implement a function of the first communication apparatus in the first aspect or the apparatus is the first communication apparatus. The apparatus includes: a processing unit, configured to determine, based on a first sounding reference signal SRS channel processing result, a second SRS channel processing solution, where the second SRS channel processing solution is used by a second communication apparatus to process an SRS; and a communication unit, configured to send the second SRS channel processing solution to the second communication apparatus.

With reference to the third aspect, in some implementations of the third aspect, the communication unit is further configured to receive a first channel processing result, where the first channel processing result includes the first SRS channel processing result.

With reference to the third aspect, in some implementations of the third aspect, the first channel processing result further includes at least one of the following: a physical downlink shared channel PDSCH processing result, a physical downlink control channel PDCCH processing result, a physical uplink shared channel PUSCH processing result, and a physical uplink control channel PUCCH processing result.

With reference to the third aspect, in some implementations of the third aspect, the communication unit is further configured to receive a first channel processing capability of the second communication apparatus, where the first channel processing capability includes an SRS channel processing capability. The processing unit is specifically configured to: determine a margin of the first channel processing capability of the second communication apparatus based on the first channel processing capability of the second communication apparatus and the first channel processing result, and determine the second SRS channel processing solution based on the margin of the first channel processing capability of the second communication apparatus.

With reference to the third aspect, in some implementations of the third aspect, the communication unit is further configured to receive a channel capability conversion rule, where the channel capability conversion rule includes a conversion rule between an SRS channel capability and a non-SRS channel capability on a first channel. The processing unit is specifically configured to determine the second SRS channel processing solution based on the margin of the first channel processing capability of the second communication apparatus and the channel capability conversion rule.

With reference to the third aspect, in some implementations of the third aspect, the second SRS processing solution includes at least one of the following: a split option, a slot number of an SRS channel, a symbol of an SRS channel, a frequency domain location of an SRS channel, and combing information of an SRS channel.

With reference to the third aspect, in some implementations of the third aspect, the communication unit is further configured to receive a second SRS channel processing result, where the second SRS channel processing result is obtained by the second communication apparatus based on the second SRS channel processing solution.

According to a fourth aspect, a communication apparatus is provided. The apparatus is configured to implement a function of the second communication apparatus in the second aspect or the apparatus is the second communication apparatus. The apparatus includes: a communication unit, configured to receive a second sounding reference signal SRS channel processing solution, where the second SRS channel processing solution is determined by a first communication apparatus based on a first SRS channel processing result; and a processing unit, configured to process an SRS based on the second SRS channel processing solution, to obtain a second SRS channel processing result.

With reference to the fourth aspect, in some implementations of the fourth aspect, the communication unit is further configured to send a first channel processing result, where the first channel processing result includes the first SRS channel processing result.

With reference to the fourth aspect, in some implementations of the fourth aspect, the processing unit is further configured to process the SRS based on a first SRS channel processing solution, to obtain the first SRS channel processing result, where the first SRS channel processing solution is a locally stored SRS channel processing solution.

With reference to the fourth aspect, in some implementations of the fourth aspect, the first channel processing result further includes at least one of the following: a physical downlink shared channel PDSCH processing result, a physical downlink control channel PDCCH processing result, a physical uplink shared channel PUSCH processing result, and a physical uplink control channel PUCCH processing result.

With reference to the fourth aspect, in some implementations of the fourth aspect, the communication unit is further configured to send a first channel processing capability of the second communication apparatus.

With reference to the fourth aspect, in some implementations of the fourth aspect, the communication unit is further configured to send a channel capability conversion rule, where the channel capability conversion rule includes a conversion rule between an SRS channel capability and a non-SRS channel capability on a first channel.

With reference to the fourth aspect, in some implementations of the fourth aspect, the second SRS processing solution includes at least one of the following: a split option, a slot number of an SRS channel, a symbol of an SRS channel, a frequency domain location of an SRS channel, and combing information of an SRS channel.

According to a fifth aspect, a communication apparatus is provided. The apparatus includes at least one processor, coupled to at least one memory. The at least one processor is configured to execute a computer program or instructions stored in the at least one memory, to perform the method provided in any one of the implementations of the first aspect or the second aspect. The communication apparatus may be a first communication apparatus or may be a second communication apparatus.

The communication device may further include an input/output circuit.

Optionally, the apparatus includes the at least one memory.

According to a sixth aspect, a communication apparatus is provided, including a processor and an interface circuit. The interface circuit is configured to receive a signal from another communication apparatus other than the communication apparatus and transmit the signal to the processor, or send a signal from the processor to the another communication apparatus other than the communication apparatus. The processor is configured to implement the method in any one of the possible implementations of the first aspect and the second aspect by using a logic circuit or executing code instructions.

According to a seventh aspect, a chip system is provided. The chip system includes a processor, and optionally, further includes a memory, configured to implement the method in any one of the possible implementations of the first aspect and the second aspect. The chip system includes a chip, or includes a chip and another discrete component.

According to an eighth aspect, a communication system is provided, including a first communication apparatus and a second communication apparatus.

The first communication apparatus is configured to implement the method in the implementations of the first aspect, and the second communication apparatus is configured to implement the method in some implementations of the second aspect.

In a possible design, the communication system further includes another device that interacts with the first communication apparatus and the second communication apparatus in the solutions provided in embodiments of this application.

According to a ninth aspect, a computer-readable storage medium is provided. The computer-readable storage medium stores a computer program or instructions. When the computer program or the instructions is/are executed, the method in any one of the possible implementations of the first aspect to the sixth aspect is implemented.

According to a tenth aspect, a computer program product including instructions is provided. When the instructions are run, the method in any one of the possible implementations of the first aspect to the sixth aspect is implemented.

According to an eleventh aspect, a computer program is provided. The computer program includes code or instructions. When the code or the instructions is/are run, the method in any one of the possible implementations of the first aspect to the sixth aspect is implemented.

### BRIEF DESCRIPTION OF DRAWINGS

FIG. 1 is a diagram of a system applicable to a method according to an embodiment of this application;
FIG. 2 is a diagram of function division manners applicable to different interfaces to which an embodiment of this application is applicable;
FIG. 3 is a diagram of a system applicable to a connection manner according to an embodiment of this application;
FIG. 4 is a diagram of an alternative SRS channel splitting solution according to an embodiment of this application;
FIG. 5 is a schematic flowchart of an example of a wireless communication method according to an embodiment of this application;
FIG. 6 is a diagram of an example of a wireless communication device according to this application;
FIG. 7 is a diagram of an example of a wireless communication apparatus according to this application; and
FIG. 8 is a diagram of an example of a chip system according to this application.

### DESCRIPTION OF EMBODIMENTS

The following describes technical solutions of this application with reference to the accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a 5th generation (5th generation, 5G) system or new radio (new radio, NR), and a 6th generation (6th generation, 6G) system or a future communication system. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine to machine (machine to machine, M2M) communication system, an internet of things (Internet of things, IoT) communication system, a vehicle-to-everything (vehicle-to-everything, V2X) communication system, an uncrewed aerial vehicle (uncrewed aerial vehicle, UAV) communication system, or another communication system.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

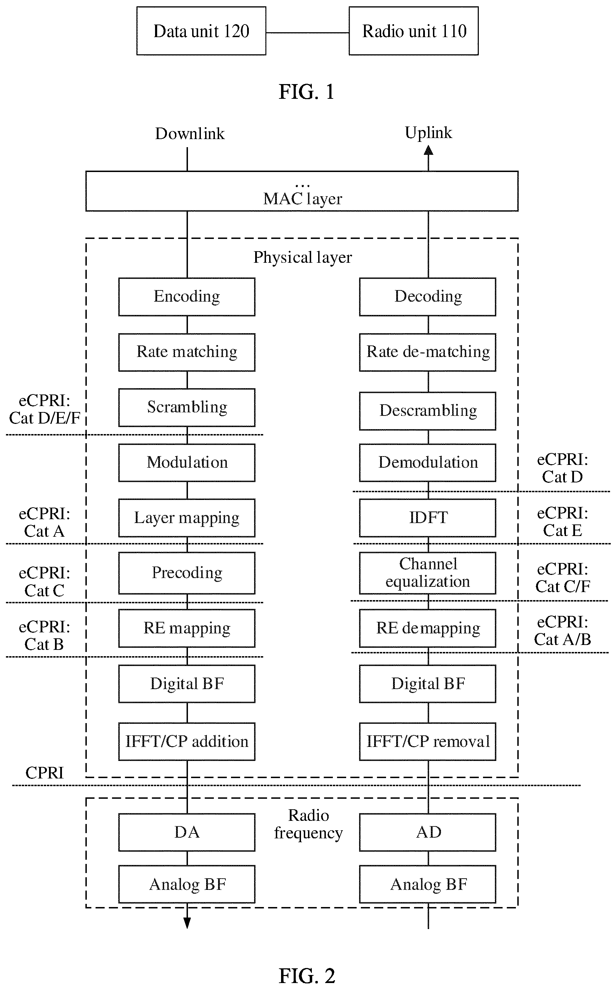

For ease of understanding of embodiments of this application, an application scenario of embodiments of this application is first described in detail with reference to FIG. 1.

FIG. 1 is a diagram of a structure of a communication system to which an embodiment of this application is applicable. An apparatus that may be involved in the communication system is first described.

Radio unit (radio unit, RU) 110: The radio unit 110 may implement functions such as intermediate frequency processing, radio frequency processing, and duplexing of a signal. For example, the radio unit 110 may be a remote radio unit (remote radio unit, RRU), an active antenna unit (active antenna unit, AAU), an open-radio unit (open-radio unit, O-RU) in an open-radio access network (open-radio access network, O-RAN), or another network element or communication apparatus having a capability of processing an intermediate frequency signal, a radio frequency signal, or an intermediate radio frequency signal.

Data unit (data unit, DU) 120: The data unit 120 may implement a baseband signal processing function. For example, the data unit 120 may be a baseband unit (baseband unit, BBU), a central unit (central unit, CU), a distributed unit (distributed unit, DU), an open-distributed unit (open-distributed unit, O-DU) in an O-RAN, or another network element or communication apparatus having a baseband signal processing capability. A module configured to perform baseband processing in the data unit 120 may be referred to as a baseband board, and there may be one or more baseband boards.

A communication interface between the data unit 120 and the radio unit 110 may be referred to as a fronthaul interface. For example, the fronthaul interface may be a common public radio interface (common public radio interface, CPRI), an enhanced common public radio interface (enhanced common public radio interface, eCPRI), or another interface that is defined in the future and that is used to connect the data unit 120 and the radio unit 110. This is not specifically limited in this application.

The CPRI is usually used for a key communication interface specification between radio equipment control (radio equipment control, REC) and radio equipment (radio equipment, RE) in a cellular wireless network, and a CPRI rate is directly proportional to a quantity of antennas and a carrier bandwidth. As a quantity of antennas and a bandwidth in an NR network increase, a requirement on the CPRI rate is increasingly high, and transmission costs greatly increase. Data transmitted in a communication protocol stack is encapsulated at each layer, and a larger amount of data is transmitted at a lower layer. Therefore, the eCPRI is introduced. At a physical layer, data at an upper layer is processed on the BBU, and data at a lower layer is processed on the RRU, thereby reducing a requirement on a transmission rate.

When the eCPRI is an interface connected between the DU and the RU, the eCPRI splits baseband processing of a gNodeB into two parts, where a DU side is referred to as a baseband processing unit (baseband high, BBH) of the BBU, and an RU side is referred to as a baseband processing unit (baseband low, BBL) of the AAU.

Different interfaces may use different function division manners. The following describes different interfaces by using an example of an O-RAN system to which embodiments of this application are applicable.

FIG. 2 is a diagram of a system of an access network. An access network device includes one or more functional modules, configured to process a signal. As shown in FIG. 2, a physical layer function is used as an example. The access network device includes one or more of the following functions: encoding, rate matching, scrambling, modulation, layer mapping, precoding, resource element (resource element, RE) mapping, digital beamforming (beamforming, BF), inverse fast Fourier transformation (inverse fast fourier transformation, IFFT)/cyclic prefix (cyclic prefix, CP) addition, decoding, rate de-matching, descrambling, demodulation, inverse discrete Fourier transformation (inverse discrete fourier transformation, IDFT), channel equalization (or channel estimation), RE demapping, and digital BF; fast Fourier transformation (fast Fourier transformation, FFT)/CP removal, digital to analog (digital to analog, DA) conversion, analog BF (uplink direction), analog to digital (analog to digital, AD) conversion, or analog BF (downlink direction).

The one or more functional modules may be implemented by software, hardware, or a combination of software and hardware, and may be physically separated or may be integrated together. It may be understood that the foregoing functional modules are merely examples. The access network device may include more other modules (for example, a scheduling module, a power control module, a hybrid automatic repeat request (hybrid automatic repeat request, HARQ) module, a flow control module, a mobility management module, or an artificial intelligence (artificial intelligence, AI) module) based on a design, or does not include a particular functional module shown in FIG. 2 (for example, does not include a digital BF module). The access network device further includes a fronthaul (fronthaul, FH) interface between a DU and an RU, configured to implement communication between the DU and the RU. The fronthaul interface includes but is not limited to a CPRI or an eCPRI. In a possible implementation, the DU is located in a BBU, the RU is located in an RRU/AAU/RRH, and an interface between the BBU and the RRU/AAU/RRH may also be referred to as the fronthaul interface. To implement the fronthaul interface, the BBU and the RRU/AAU/RRH may be connected through a fronthaul network, or the DU and the RU may be connected through the fronthaul network. For example, the fronthaul network includes but is not limited to an optical fiber direct connection network and a wavelength division network.

The access network device may support one or more categories of fronthaul interfaces. Different fronthaul interfaces respectively correspond to DUs and RUs that have different functions. As shown in FIG. 2, if the fronthaul interface between the DU and the RU is the CPRI, the DU is configured to implement one or more of baseband functions, and the RU is configured to implement one or more of radio frequency functions. If the fronthaul interface between the DU and the RU is the eCPRI, compared with the CPRI, some downlink and/or uplink baseband functions are moved from the DU to the RU for implementation. Different splitting manners between the DU and the RU correspond to different categories (category, briefly referred to as Cat) of eCPRIs. FIG. 2 provides six eCPRI examples, which are represented by Cat A, Cat B, Cat C, Cat D, Cat E, Cat F (which may also be represented as Option A to Option F, Option 1 to Option 6, or in another manner). It may be understood that there may be another splitting manner between the DU and the RU, in other words, there may be another category of eCPRI.

eCPRI Cat A is used as an example. For downlink transmission, layer mapping is used as a split. The DU is configured to implement layer mapping and one or more previous functions (to be specific, one or more of encoding, rate matching, scrambling, modulation, and layer mapping). Other functions (for example, one or more of RE mapping, digital BF, or IFFT/CP addition) after the layer mapping are removed to the RU for implementation. For uplink transmission, RE demapping is used as split. The DU is configured to implement demapping and one or more previous functions (to be specific, one or more functions of decoding, rate de-matching, descrambling, demodulation, IDFT, channel equalization, and RE demapping). Other functions (for example, one or more of digital BF or FFT/CP removal) after the demapping are removed to the RU for implementation.

Similarly, the eCPRI Cat B, the eCPRI Cat C, the eCPRI Cat D, the eCPRI Cat E, and the eCPRI Cat F separately correspond to different DU and RU splitting manners. Functions at a splitting point and before the splitting point are implemented by the DU, and a function after the splitting point is implemented by the RU. For splitting points of various categories of eCPRIs, refer to FIG. 2. Details are not described. For example, for the eCPRI Cat B, RE mapping is used as a split of downlink transmission, and RE demapping is used as a split of uplink transmission. For uplink transmission, RE mapping and a function before the RE mapping are implemented by the DU, and a function after the RE mapping and a radio frequency function are implemented by the RU. For downlink transmission, RE demapping and a function before the RE demapping are implemented by the DU, and a function after the RE demapping and a radio frequency function are implemented by the RU.

An eCPRI splitting manner may be symmetric for an uplink and a downlink, for example, eCPRI Cat B and Cat C shown in FIG. 2. Alternatively, the eCPRI splitting manner may be asymmetric for uplink and downlink, for example, eCPRI Cat A, Cat D, Cat E, and Cat F shown in FIG. 2. This is not limited. Optionally, for uplink and/or downlink, different splitting manners may be configured for different channels or different channel groups, in other words, different categories of eCPRIs are configured. One group of channels may include one or more channels.

In a possible design, the DU is located in the BBU, the RU is located in the RRU/AAU/RRH, a processing unit configured to implement the baseband function in the BBU is referred to as a baseband high (baseband high, BBH) unit, and a processing unit configured to implement the baseband function in the RRU/AAU/RRH is referred to as a baseband low (baseband low, BBL) unit.

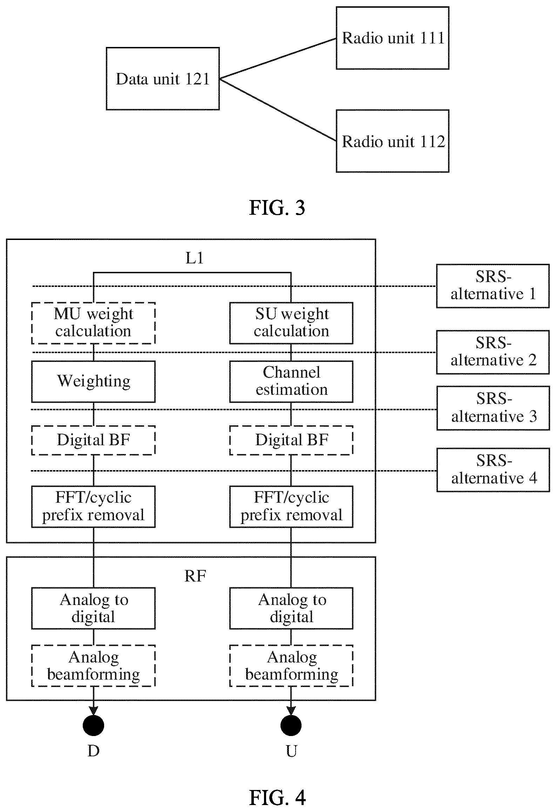

FIG. 3 is a diagram of a system applicable to a connection manner according to an embodiment of this application. The system may be a system including a plurality of radio units that are connected in a direct connection manner. For example, refer to FIG. 3. A data unit 121 is separately directly connected to a radio unit 111 and a radio unit 112, and the data unit 111 directly communicates with the radio unit 112 through an interface (for example, an eCPRI).

Optionally, the system may alternatively be a system including a plurality of radio units that are connected in a cascading manner or a system including a plurality of data units.

It should be understood that the foregoing describes only several connection manners applicable to embodiments of this application. The embodiments of this application may be further applicable to another connection manner in which the radio unit and the data unit can communicate with each other. This is not particularly limited in this application.

Currently, a BBH and a BBL determine splitting and deployment solutions of uplink and downlink data channels by using a negotiation mechanism. A physical uplink shared channel (physical uplink shared channel, PUSCH) is used as an example. After eCPRI splitting, physical deployment of different RUs is independent, and BBLs of different RUs cannot form a resource pool. Therefore, a PUSCH channel specification of the BBL needs to be designed based on a requirement on a peak specification. However, in an actual network, load of the PUSCH channel greatly fluctuates, a peak specification is high, and average usage is low. Consequently, processing resources are wasted when a peak value of the PUSCH channel is not reached on a BBL side. For processing of other channels, for example, if a physical downlink shared channel (physical downlink shared channel, PDSCH), a physical downlink control channel (physical downlink control channel, PDCCH), a physical uplink control channel (physical uplink control channel, PUCCH), and a sounding reference signal (sounding reference signal, SRS) are deployed on the BBL, the same problem also exists.

Similar to the PUSCH channel, the SRS channel also has a plurality of alternative splitting solutions. As shown in FIG. 4, an SRS-alternative 1 is used as an example. All uplink processing functions of an SRS channel are deployed on a BBL side. An SRS-alternative 4 is used as an example. A BBL side includes FFT/CP removal, and a BBH side includes digital (Digital) beamforming (beamforming, BF) (optional), channel estimation, and single user (single user, SU) weight calculation. In this case, most uplink processing functions of the SRS channel are deployed on the BBH side. Compared the SRS-alternative 1 and the SRS-alternative 4, the SRS-alternative 1 has more functions deployed on the BBL side and consumes more BBL resources, and the SRS-alternative 4 has more functions deployed on the BBH side and consumes more BBH resources.

In a time division duplex (time division duplex, TDD) system, wireless communication performance depends on measurement quality of the SRS channel. The SRS channel has an aging effect. Therefore, a shorter sending periodicity of the SRS channel usually indicates more timely and accurate measurement of the SRS channel and better radio performance. However, a shorter SRS periodicity also means a larger SRS specification and more processing resource consumption. In an actual product, an SRS specification is limited due to limited processing resources. This restricts improvement of radio performance of the TDD system.

In a current technology, a negotiation mechanism is used between a BBH and a BBL. When the system is started, splitting and deployment solutions of uplink and downlink channels (PUSCH/PDSCH/PDCCH/PUCCH/SRS) on the BBH and the BBL are semi-statically determined. An SRS channel splitting and deployment solution shown in FIG. 4 is used as an example. Four SRS combs are configured on an air interface of a particular cell. After a BBH negotiates with a BBL, a comb 0 and a comb 1 are deployed on the BBL side (where the SRS-alternative 1 is used), and a comb 2 and a comb 3 are deployed on the BBH side (where the SRS-alternative 4 is used). However, as described above, currently, splitting and function deployment of the channels on the BBL and the BBH are basically independent of each other. In addition, actual usage of some channels such as the PUSCH on the BBL in a live network is far lower than a designed processing capability, and a processing specification of the SRS channel is usually limited. This restricts improvement of radio performance of the TDD system.

Based on the foregoing causes, this application provides a communication method, to support dynamic and flexible splitting and deployment of an SRS channel, fully utilize a processing capability on a BBL side, achieve an effect of improving an SRS channel specification, and further improve radio performance.

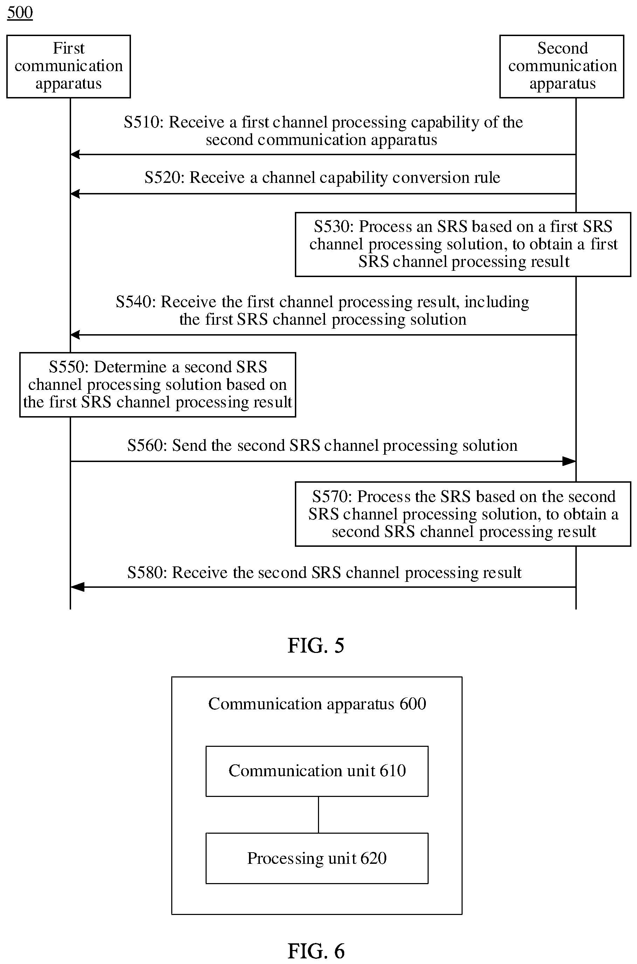

FIG. 5 is a schematic flowchart of an example of a wireless communication method according to an embodiment of this application. A first communication apparatus may be the BBH described above, or another apparatus that has a corresponding function and that is defined in the future. This is not particularly limited in this application. A second communication apparatus may be the BBL described above, or another apparatus that has a corresponding function and that is defined in the future. This is not particularly limited in this application.

S510: The first communication apparatus receives a first channel processing capability of the second communication apparatus.

Correspondingly, the second communication apparatus sends the first channel processing capability of the second communication apparatus.

The first channel processing capability includes an SRS channel processing capability.

Optionally, the first channel processing capability may further include one or more of a PDSCH channel processing capability, a PDCCH channel processing capability, a PUSCH channel processing capability, and a PUCCH channel processing capability.

S520: The first communication apparatus receives a channel capability conversion rule.

Correspondingly, the second communication apparatus sends the channel capability conversion rule.

The channel capability conversion rule includes a conversion rule between an SRS channel capability and a non-SRS channel capability on a first channel. The first channel includes at least an SRS channel, and may further include one or more of a PDSCH channel, a PDCCH channel, a PUSCH channel, and a PUCCH channel.

In this embodiment of this application, the second communication apparatus may send the first channel processing capability of the second communication apparatus and/or the channel capability conversion rule to the first communication apparatus in a form of eCPRI signaling during system restart or reconfiguration. The first channel processing capability of the second communication apparatus and the channel capability conversion rule may be carried in a same piece of signaling for sending, or may be carried in different pieces of signaling for respective sending. Signaling for defining a channel conversion rule can facilitate interconnection between a DU and an RU of different vendors, and products of a same vendor also facilitate design decoupling between the DU and the RU.

S530: The second communication apparatus processes an SRS based on a first SRS channel processing solution, to obtain a first SRS channel processing result.

The first SRS channel processing solution is a locally stored SRS processing solution, for example, an SRS-alternative 4, to obtain advantages of processing resource pooling and flexible evolution.

Optionally, the second communication apparatus may further process corresponding signals based on locally stored processing solutions of other channels, including but not limited to the PDSCH channel, the PDCCH channel, the PUSCH channel, and the PUCCH channel, to obtain corresponding channel processing results. A set of these channel processing results and the first SRS channel processing result may be referred to as a first channel processing result.

S540: The first communication apparatus receives the first channel processing result, including the first SRS channel processing result.

Correspondingly, the second communication apparatus sends the first channel processing result, including the first SRS channel processing result.

S550: The first communication apparatus determines a second SRS channel processing solution based on the first SRS channel processing result.

Specifically, the first communication apparatus may calculate a margin of the first channel processing capability of the second communication apparatus based on a PDSCH channel processing result, a PDCCH channel processing result, a PUSCH channel processing result, a PUCCH channel processing result, and an SRS channel processing result in a current periodicity and the first channel processing capability of the second communication apparatus, to determine an SRS channel processing solution in a next periodicity based on the margin of the first channel processing capability of the second communication apparatus. For example, the PUSCH, the PUCCH channel, and the SRS channel are all uplink channels, and have similar functional modules in algorithm processing. In addition, baseband processing in the industry usually has a specific programmability. Therefore, specification interchange of the PUSCH, the PUCCH channel, and the SRS channel is feasible in design. Similarly, specification conversion can be performed by analyzing a computing power difference between the PDSCH/PDCCH and the SRS channel. For a conversion rule, conversion between PUSCH and SRS specifications is used as an example. It is assumed that a total processing capability of the PUSCH channel and the SRS channel is A, a consumption capability of each basic processing unit of the PUSCH channel is a1, and a processing specification of the PUSCH channel is b1; and consumption of each basic processing unit of the SRS channel is a2, and a processing specification of the SRS channel is b2. A system supports any combination of b1 and b2 as long as the following condition is satisfied: a1 * b1 + a2 * b2 ≤ A. Therefore, in this embodiment of this application, dynamic and flexible SRS channel splitting and function deployment can be implemented. The first communication apparatus (BBH) may periodically collect statistics about service statuses of the channels, and convert a processing specification of another idle channel into the processing specification of the SRS channel by using the conversion rule, to improve an SRS processing capability.

The first channel processing result corresponds to a channel processing result in a current periodicity, and the second SRS channel processing solution corresponds to an SRS channel processing solution in a next periodicity. The second SRS channel processing solution includes but is not limited to a split option (used to determine an SRS deployment function on a BBL side), a slot number of an SRS channel, a symbol of an SRS channel, a frequency domain location of an SRS channel, and combing information of an SRS channel.

S560: The first communication apparatus sends the second SRS channel processing solution.

Correspondingly, the second communication apparatus receives the second SRS channel processing solution.

The first communication apparatus may send the second SRS channel processing solution in a form of eCPRI signaling. Correspondingly, the second communication apparatus receives the eCPRI signaling, to obtain the second SRS channel processing solution.

Optionally, a notification frequency of the eCPRI signaling may be determined based on an actual application scenario, and may be at a millisecond level or a second level. This is not limited in this application.

S570: The second communication apparatus processes the SRS based on the second SRS channel processing solution, to obtain a second SRS channel processing result.

Specifically, the second communication apparatus updates a channel configuration based on the second SRS channel processing solution after receiving the processing solution. When the SRS arrives, the second communication apparatus completes SRS channel processing based on the updated channel configuration, to obtain the second SRS channel processing result.

Optionally, content included in the second SRS channel processing result is determined by content of a current split option. For example, the content may include channel information, weight information, and the like.

S580: The first communication apparatus receives the second SRS channel processing result.

Correspondingly, the second communication apparatus sends the second SRS channel processing result.

The second communication apparatus may send the second SRS channel processing result in a form of eCPRI signaling. Correspondingly, the first communication apparatus receives the eCPRI signaling, to obtain the second SRS channel processing result.

Optionally, the first communication apparatus may further determine a third SRS channel processing solution based on the second SRS channel processing result. In this way, a processing solution in a next periodicity may be continuously adjusted based on a processing result in a current periodicity, so that the processing solution can be dynamically adjusted, thereby fully utilizing idle processing resources on the BBL side, improving the processing specification of the SRS channel, and further improving radio performance.

In a running process of a cell, when load of a PUSCH, a PDSCH, a PDCCH, or a PUCCH channel in an actual network does not reach a peak specification, according to the technical solution of this application, a processing capability of another idle channel on the BBL is used to process the SRS channel, so that idle processing resources on the BBL side are fully utilized, the processing specification of the SRS channel is improved, and radio performance is further improved.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in the foregoing embodiments of this application, a method implemented by a communication device may be alternatively implemented by a component (for example, a chip or a circuit) that can be disposed inside the communication device.

The foregoing describes the signal processing method provided in embodiments of this application. The following describes a communication apparatus provided in embodiments of this application with reference to FIG. 6 to FIG. 8. In a possible implementation, the communication apparatus is configured to implement the steps or procedures corresponding to the first apparatus in the foregoing method embodiment. In another possible implementation, the communication apparatus is configured to implement the steps or procedures corresponding to the second apparatus in the foregoing method embodiment.

FIG. 6 is a block diagram of a communication apparatus 600 according to an embodiment of this application. As shown in FIG. 6, the apparatus 600 may include a communication unit 610 and a processing unit 620. The communication unit 610 may communicate with the outside, and the processing unit 620 is configured to process data. The communication unit 610 may also be referred to as a communication interface or a transceiver unit.

In a possible design, the apparatus 600 may implement the steps or procedures performed by the first communication apparatus in the foregoing method embodiment. The processing unit 620 is configured to perform the processing-related operations of the first communication apparatus in the foregoing method embodiment. The communication unit 610 is configured to perform the sending-related operations of the first communication apparatus in the foregoing method embodiment.

In another possible design, the apparatus 600 may implement the steps or procedures performed by the second communication apparatus in the foregoing method embodiment. The communication unit 610 is configured to perform the receiving-related operations of the second communication apparatus in the foregoing method embodiment. The processing unit 620 is configured to perform the processing-related operations of the second communication apparatus in the foregoing method embodiment.

It should be understood that the apparatus 600 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 600 may be specifically the first communication apparatus in the foregoing embodiment, and may be configured to perform the procedures and/or steps corresponding to the first communication apparatus in the foregoing method embodiment; or the apparatus 600 may be specifically the second communication apparatus in the foregoing embodiment, and may be configured to perform the procedures and/or steps corresponding to the second communication apparatus in the foregoing method embodiment. To avoid repetition, details are not described herein.

The apparatus 600 in each of the foregoing solutions has a function of implementing corresponding steps performed by the first communication apparatus in the foregoing method, or the apparatus 600 in each of the foregoing solutions has a function of implementing corresponding steps performed by the second communication apparatus in the foregoing method. The function may be implemented by hardware, or may be implemented by hardware executing corresponding software. The hardware or software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit such as the processing unit may be replaced with a processor, to separately perform the sending/receiving operations and the processing-related operations in the method embodiment.

In addition, the communication unit may alternatively be a transceiver circuit (for example, may include a receiving circuit and a sending circuit), and the processing unit may be a processing circuit. In this embodiment of this application, the apparatus in FIG. 6 may be an AP or a STA in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

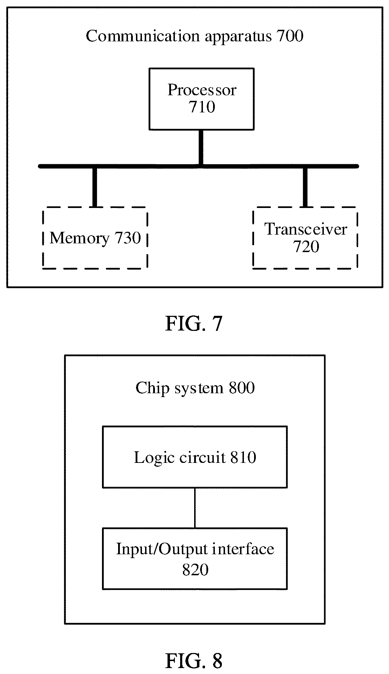

FIG. 7 is a block diagram of a communication apparatus 700 according to an embodiment of this application. The apparatus 700 includes a processor 710 and a transceiver 720. The processor 710 and the transceiver 720 communicate with each other through an internal connection path, and the processor 710 is configured to execute instructions, to control the transceiver 720 to send a signal and/or receive a signal.

Optionally, the apparatus 700 may further include a memory 730. The memory 730 communicates with the processor 710 and the transceiver 720 through an internal connection path. The memory 730 is configured to store instructions, and the processor 710 may execute the instructions stored in the memory 730. In a possible implementation, the apparatus 700 is configured to implement the procedures and steps corresponding to the first communication apparatus in the foregoing method embodiment. In another possible implementation, the apparatus 700 is configured to implement the procedures and steps corresponding to the second communication apparatus in the foregoing method embodiment.

It should be understood that the apparatus 700 may be specifically the first communication apparatus or the second communication apparatus in the foregoing embodiments, or may be a chip or a chip system. Correspondingly, the transceiver 720 may be a transceiver circuit of the chip. This is not limited herein. Specifically, the apparatus 700 may be configured to perform the steps and/or procedures corresponding to the first communication apparatus or the second communication apparatus in the foregoing method embodiment. Optionally, the memory 730 may include a read-only memory and a random access memory, and provide instructions and data for the processor. A part of the memory may further include a nonvolatile random access memory. For example, the memory may further store information of a device type. The processor 710 may be configured to execute the instructions stored in the memory, and when the processor 710 executes the instructions stored in the memory, the processor 710 is configured to perform the steps and/or the procedures corresponding to the first communication apparatus or the second communication apparatus in the foregoing method embodiment.

In an implementation process, steps in the foregoing method can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing method in combination with hardware of the processor. To avoid repetition, details are not described herein.

It should be noted that, the processor in embodiments of this application may be an integrated circuit chip, and has a signal processing capability. In an implementation process, the steps in the foregoing method embodiment may be implemented by using a hardware integrated logical circuit in the processor, or by using instructions in a form of software. The processor may be a general purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor in embodiments of this application may implement or perform the method, the steps, and the logical block diagrams that are disclosed in embodiments of this application. The general purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing method in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the system and method described in this specification is intended to include but is not limited to these memories and any other appropriate type of memory.

It should be noted that when the processor is a general purpose processor, a DSP, an ASIC, an FPGA or another programmable logic device, a discrete gate or a transistor logic device, or a discrete hardware component, the memory (storage module) may be integrated into the processor. It should further be noted that the memory described in this specification is intended to include but is not limited to these memories and any other appropriate type of memory.

FIG. 8 is a diagram of a chip system 800 according to an embodiment of this application. The chip system 800 (or may be referred to as a processing system) includes a logic circuit 810 and an input/output interface (input/output interface) 820.

The logic circuit 810 may be a processing circuit in the chip system 800. The logic circuit 810 may be coupled and connected to a storage unit, and invoke instructions in the storage unit, so that the chip system 800 can implement the method and functions in embodiments of this application. The input/output interface 820 may be an input/output circuit in the chip system 800, and outputs information processed by the chip system 800, or inputs to-be-processed data or signaling to the chip system 800 for processing.

Specifically, for example, if the chip system 800 is installed in a first communication apparatus, the logic circuit 810 is coupled to the input/output interface 820, the logic circuit 810 may send a first frame by using the input/output interface 820, and the first frame may be generated by the logic circuit 810. For another example, if the chip system 800 is installed in a second communication apparatus, the logic circuit 810 is coupled to the input/output interface 820, the logic circuit 810 may receive a first frame through the input/output interface 820, and the logic circuit 810 determines a maximum transmit power PSD based on the first frame.

In a solution, the chip system 800 is configured to implement the operations performed by the first communication apparatus in the foregoing method embodiment.

For example, the logic circuit 810 is configured to implement the processing-related operations performed by the first communication apparatus in the foregoing method embodiment, for example, the processing-related operations performed by the first communication apparatus in the embodiment shown in FIG. 5. The input/output interface 820 is configured to implement the sending-related and/or receiving-related operations performed by the first communication apparatus in the foregoing method embodiment, for example, the processing-related operations performed by the first communication apparatus in the embodiment shown in FIG. 5.

In another solution, the chip system 800 is configured to implement the operations performed by the second communication apparatus in the foregoing method embodiment.

For example, the logic circuit 810 is configured to implement the processing-related operations performed by the second communication apparatus in the foregoing method embodiment, for example, the processing-related operations performed by the second communication apparatus in the embodiment shown in FIG. 5. The input/output interface 820 is configured to implement the sending-related and/or receiving-related operations performed by the second communication apparatus in the foregoing method embodiment, for example, the processing-related operations performed by the second communication apparatus in the embodiment shown in FIG. 5.

In addition, this application further provides a computer-readable storage medium. The computer-readable storage medium stores computer instructions. When the computer instructions are run on a computer, the operations and/or procedures performed by the first communication apparatus or the second communication apparatus in the method embodiment of this application are enabled to be performed.

This application further provides a computer program product. The computer program product includes computer program code or instructions. When the computer program code or the instructions is/are run on a computer, the operations and/or procedures performed by the first communication apparatus or the second communication apparatus in the method embodiment of this application are enabled to be performed.

In addition, this application further provides a communication system, including the first communication apparatus and the second communication apparatus in embodiments of this application.

It should further be noted that the memory described in this specification is intended to include, but is not limited to, these memories and any other appropriate type of memory.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiment. Details are not described herein. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk drive, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that ordinal numbers such as "first" and "second" in embodiments of this application are for distinguishing between a plurality of objects, but are not intended to limit a size, content, an order, a time sequence, priorities, importance of the plurality of objects, or the like. For example, first information and second information do not indicate a difference in an information amount, content, a priority, importance, or the like.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in this application, "at least one" means one or more, and "a plurality of" means two or more. "At least one of items (pieces)" or a similar expression thereof refers to one item (piece) or a plurality of items (pieces), that is, any combination of these items, including any combination of singular items (pieces) or plural items (pieces). For example, at least one item (piece) of a, b, or c represents: a, b, c, a and b, a and c, b and c, or a and b and c.

It should be further understood that, unless otherwise specified, a meaning similar to "an item includes one or more of the following: A, B, and C" in this application usually means that the item may be any one of the following: A; B; C; A and B; A and C; B and C; A, B and C; A and A; A, A and A; A, A and B; A, A and C; A, B and B; A, C and C; B and B, B, B and B, B, B and C, C and C; C, C and C, and other combinations of A, B, and C. The foregoing uses three elements A, B, and C as an example to describe an optional case of the item. When an expression is "an item includes at least one of the following: A, B, ..., and X", in other words, more elements are included in the expression, a case to which the item is applicable may also be obtained according to the foregoing rule.

It should be further understood that, the term "and/or" in this application describes only an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
determining, by a first communication apparatus based on a first sounding reference signal SRS channel processing result, a second SRS channel processing solution, wherein the second SRS channel processing solution is used by a second communication apparatus to process an SRS; and
sending, by the first communication apparatus, the second SRS channel processing solution to the second communication apparatus.

2. The method according to claim 1, wherein the method further comprises:
receiving, by the first communication apparatus, a first channel processing result, wherein the first channel processing result comprises the first SRS channel processing result.

3. The method according to claim 2, wherein the first channel processing result further comprises at least one of the following:
a physical downlink shared channel PDSCH processing result, a physical downlink control channel PDCCH processing result, a physical uplink shared channel PUSCH processing result, and a physical uplink control channel PUCCH processing result.

4. The method according to claim 2 or 3, wherein the method further comprises:
receiving, by the first communication apparatus, a first channel processing capability of the second communication apparatus, wherein the first channel processing capability comprises an SRS channel processing capability; and
determining, by the first communication apparatus, the second SRS channel processing solution based on the first SRS channel processing result comprises:
determining, by the first communication apparatus, a margin of the first channel processing capability of the second communication apparatus based on the first channel processing capability of the second communication apparatus and the first channel processing result; and
determining, by the first communication apparatus, the second SRS channel processing solution based on the margin of the first channel processing capability of the second communication apparatus.

5. The method according to claim 4, wherein the method further comprises:
receiving, by the first communication apparatus, a channel capability conversion rule, wherein the channel capability conversion rule comprises a conversion rule between an SRS channel capability and a non-SRS channel capability on the first channel; and
determining, by the first communication apparatus, the second SRS channel processing solution based on the margin of the first channel processing capability of the second communication apparatus comprises:
determining, by the first communication apparatus, the second SRS channel processing solution based on the margin of the first channel processing capability of the second communication apparatus and the channel capability conversion rule.

6. The method according to any one of claims 1 to 5, wherein the second SRS processing solution comprises at least one of the following:
a split option, a slot number of an SRS channel, a symbol of an SRS channel, a frequency domain location of an SRS channel, and combing information of an SRS channel.

7. The method according to any one of claims 1 to 6, wherein the method further comprises:
receiving, by the first communication apparatus, a second SRS channel processing result, wherein the second SRS channel processing result is obtained by the second communication apparatus based on the second SRS channel processing solution.

8. A wireless communication method, comprising:
receiving, by a second communication apparatus, a second sounding reference signal SRS channel processing solution, wherein the second SRS channel processing solution is determined by a first communication apparatus based on a first SRS channel processing result; and
processing, by the second communication apparatus, an SRS based on the second SRS channel processing solution, to obtain a second SRS channel processing result.

9. The method according to claim 8, wherein the method further comprises:
sending, by the second communication apparatus, a first channel processing result, wherein the first channel processing result comprises the first SRS channel processing result.

10. The method according to claim 9, wherein the method further comprises:
processing, by the second communication apparatus, the SRS based on a first SRS channel processing solution, to obtain the first SRS channel processing result, wherein the first SRS channel processing solution is a locally stored SRS channel processing solution.

11. The method according to claim 9 or 10, wherein the first channel processing result further comprises at least one of the following:
a physical downlink shared channel PDSCH processing result, a physical downlink control channel PDCCH processing result, a physical uplink shared channel PUSCH processing result, and a physical uplink control channel PUCCH processing result.

12. The method according to any one of claims 9 to 11, wherein the method further comprises:
sending, by the second communication apparatus, the first channel processing capability of the second communication apparatus.

13. The method according to claim 12, wherein the method further comprises:
sending, by the second communication apparatus, a channel capability conversion rule, wherein the channel capability conversion rule comprises a conversion rule between an SRS channel capability and a non-SRS channel capability on the first channel.

14. The method according to any one of claims 8 to 13, wherein the second SRS processing solution comprises at least one of the following:
a split option, a slot number of an SRS channel, a symbol of an SRS channel, a frequency domain location of an SRS channel, and combing information of an SRS channel.

15. A wireless communication method, comprising:
sending, by a first communication apparatus, a second SRS channel processing solution, wherein the second SRS channel processing solution is determined by the first communication apparatus based on a first SRS channel processing result; and
receiving, by a second communication apparatus, the second SRS channel processing solution, and processing an SRS based on the second SRS channel processing solution, to obtain a second SRS channel processing result.

16. The method according to claim 15, wherein the method further comprises:
sending, by the second communication apparatus, the first SRS channel processing result; and
determining, by the first communication apparatus, the second SRS channel processing solution based on the first SRS channel processing result.

17. The method according to claim 16, wherein the method further comprises:
sending, by the second communication apparatus, the first channel processing capability of the second communication apparatus;
determining, by the first communication apparatus, a margin of the first channel processing capability of the second communication apparatus based on the first channel processing capability of the second communication apparatus and the first channel processing result; and
determining, by the first communication apparatus, the second SRS channel processing solution based on the margin of the first channel processing capability of the second communication apparatus.

18. The method according to claim 17, wherein the method further comprises:
sending, by the second communication apparatus, a channel capability conversion rule, wherein the channel capability conversion rule comprises a conversion rule between an SRS channel capability and a non-SRS channel capability on the first channel; and
determining, by the first communication apparatus, the second SRS channel processing solution based on the margin of the first channel processing capability of the second communication apparatus and the channel capability conversion rule.

19. A communication apparatus, comprising:
a memory, configured to store a computer program or instructions; and
a processor, configured to execute the computer program or the instruction stored in the memory, to enable the communication apparatus to perform the method according to any one of claims 1 to 7.

20. A communication apparatus, comprising:
a memory, configured to store a computer program or instructions; and
a processor, configured to execute the computer program or the instruction stored in the memory, to enable the communication apparatus to perform the method according to any one of claims 8 to 14.

21. A communication system, comprising the communication apparatus according to claim 19 and the communication apparatus according to claim 20.

22. A computer-readable storage medium, wherein the computer-readable storage medium stores a computer program or instructions, and when the computer program or the instruction is/are executed by a communication apparatus, the method according to any one of claims 1 to 14 is enabled to be performed.

23. A computer program product comprising instructions, wherein when the computer program product runs on a computer, the method according to any one of claims 1 to 14 is enabled to be performed.

24. A chip system, comprising a processor, configured to invoke a computer program or instructions from a memory and run the computer program or the instructions, to enable a communication apparatus in which the chip system is installed to implement the method according to any one of claims 1 to 14.
